# FASCICULE DE BREVET EUROPEEN

(11) **EP 2 304 493 B1**
(45) Date de publication et mention de la délivrance du brevet: **03.09.2014**
(21) Numéro de dépôt: 09737054.8
(22) Date de dépôt: 13.07.2009
(51) Int. Cl.: G02C 7/08, B32B 27/00, G02B 1/10

(54) **PROCEDE DE TRANSFERT D'UNE PORTION DE FILM FONCTIONNEL**
VERFAHREN ZUR ÜBERTRAGUNG EINES TEILS EINES FUNKTIONALEN FILMS
METHOD OF TRANSFERRING A PORTION OF A FUNCTIONAL FILM

(30) Priorité: 21.07.2008 FR 0854950
(43) Date de publication de la demande: 06.04.2011
(73) Titulaire: Essilor International (Compagnie Générale d'Optique), 94220 Charenton-le-Pont (FR)
(72) Inventeur: DARMES, Daniel, F-94220 Charenton-le-Pont (FR); LAVILLONIERE, Nicolas, F-94220 Charenton-Le-Pont (FR); MARCK, Christelle, F-94220 Charenton-le-Pont (FR); ROUSSEL, Eric, F-94220 Charenton-le-Pont (FR)
(74) Mandataire: Cabinet Plasseraud
(86) Numéro de dépôt international: PCT/FR2009/051398
(87) Numéro de publication internationale: WO 2010/010275

(56) Documents cités:
- EP-A- 0 359 532
- EP-A- 1 464 479
- AU-B2- 629 504
- AU-B3- 695 736
- FR-A- 2 673 299
- US-A- 4 767 659
- US-A1- 2004 228 996
- US-A1- 2006 006 336
- US-A1- 2006 141 196
- US-A1- 2006 230 661

## Description

La présente invention concerne un procédé de transfert d'une portion de film fonctionnel sur un substrat. Elle concerne aussi une structure multicouche qui comprend une portion de film fonctionnel, et qui est adaptée pour que cette portion puisse être transférée sur un substrat.

Il est souvent nécessaire de reporter sur un substrat définitif, une portion de film qui a été élaborée sur un support de fabrication, appelé plaque de base dans la suite. Un tel report permet de dissocier la fabrication du substrat et celle de la portion du film, et ainsi d'augmenter un rendement global de fabrication. Ceci est particulièrement utile, notamment, lorsque la fabrication du film dans lequel la portion est prélevée présente une certaine technicité.

Or une couche adhésive, telle qu'une couche d'un adhésif sensible à la pression (PSA pour «Pressure Sensitive Adhesive» en anglais) est souvent utilisée pour fixer la portion du film sur le substrat. En effet, une telle couche est facile à mettre en oeuvre, peu onéreuse, et compatible avec beaucoup de composants qui peuvent entrer dans la composition du film. Dans ce cas, le film est directement fabriqué avec la couche adhésive sur la plaque de base. La durée globale de fabrication et le prix de revient final sont ainsi réduits.

La portion du film peut être décollée de la plaque de base par pelage ou par une autre méthode telle que l'utilisation de rouleau de prélèvement, de sorte qu'une séparation est produite au niveau d'une interface entre la portion et la plaque de base, qui présente une cohésion faible. Cette interface de rupture est située en général entre la couche adhésive et la plaque de base, ou bien entre la couche adhésive et un film de séparation qui reste sur la plaque de base. La couche adhésive est alors exposée après que la portion du film ait été séparée de la plaque de base, jusqu'à ce que la portion du film soit associée avec le substrat. Pendant cet intervalle de temps, des poussières ou des pollutions diverses peuvent se fixer sur la couche adhésive, et sont susceptibles de créer des défauts et/ou d'altérer son pouvoir d'adhésion. Il est alors nécessaire de prendre des précautions pour éviter de tels défauts. Mais des mesures de précaution supplémentaires sont en général onéreuses, et réduisent le débit de fabrication. En outre, elles peuvent être incompatibles avec la réalisation d'étapes de fabrication supplémentaires, entre la séparation de la portion de film par rapport à la plaque de base et son application sur le substrat.

Par ailleurs, lorsque la portion de film est décollée de la plaque de base, elle est saisie par un bord puis écartée progressivement de la plaque de base. Ce mode de séparation peut notamment produire un défaut de type rayure, étirement, marque sur l'adhésif, écrasement ou déchirement à l'endroit auquel la séparation entre la portion de film et la plaque de base est initiée. De tels défauts sont produits quelque soit l'outil qui est utilisé pour saisir le bord de la portion de film, notamment lorsqu'une lame ou une pince est utilisée.

Le report d'une portion de film est notamment envisagé pour la fabrication d'un verre de lunettes, ou verre ophtalmique. Dans ce cas, le verre de lunettes est formé à partir d'un substrat de série sur lequel est reportée une portion de film fonctionnalisée. A titre d'exemple, la portion de film peut conférer au verre final une ou plusieurs fonctions optiques telle qu'une coloration, un pouvoir polarisant, un pouvoir antireflet, une fonction de protection solaire, une fonction photochrome, une puissance optique, etc. Mais, pour une telle application ophtalmique, les exigences de qualité sont très élevées. En particulier, une poussière qui est collée et incluse entre la portion de film et le substrat, de même que des irrégularités au bord de la portion de film, ne sont pas acceptables. Le document US 2004/0 228 996 A1 divulgue un autocollant pelable. Le document US 2006/0 006 336 A1 divulgue un procédé de fabrication de film optique.

Un but de la présente invention consiste donc à éviter de créer de tels défauts.

Pour cela, selon un premier aspect de l'invention, celle-ci propose un procédé de transfert d'une portion d'un film fonctionnel sur un substrat, suivant lequel le film fonctionnel est retenu initialement sur une plaque de base par une structure adhérente. Cette structure adhérente comprend les étapes de la revendication 1.

Ainsi, dans un procédé selon l'invention, les deux couches adhésives ont des rôles distincts. La première couche adhésive fixe sur la plaque de base l'ensemble qui comprend le film fonctionnel, la seconde couche adhésive et le film de séparation. Elle peut maintenir cet ensemble fermement pendant la durée qui est nécessaire pour fabriquer le film fonctionnel, ainsi que pendant l'étape /1/ du procédé de transfert. Lors de l'étape /2/, l'interface entre la première couche adhésive et la portion du film de séparation est rompue, de sorte que la portion du film fonctionnel est séparée de la plaque de base. Elle est séparée de celle-ci avec la portion du film de séparation, et avec la portion de la seconde couche adhésive qui est située entre elles. Une telle séparation est possible grâce au maintien plus faible de la première couche adhésive par rapport à celui de la seconde couche adhésive, et grâce au fait que le premier sillon forme une découpe à la fois dans le film fonctionnel et dans le film de séparation.

La portion du film de séparation est séparée ultérieurement de la portion du film fonctionnel, par rupture de l'adhésion de la portion de seconde couche adhésive sur la portion du film de séparation. Ce retrait de la portion du film de séparation est effectué avantageusement juste avant d'appliquer la portion de seconde couche adhésive contre le substrat, de sorte que la portion du film de séparation constitue une protection de la portion de seconde couche adhésive jusqu'à l'application sur le substrat. De cette façon, aucune poussière ni pollution ne peut se fixer sur la portion de seconde couche adhésive qui restera dans l'assemblage final entre la portion du film fonctionnel et le substrat.

En outre, la seconde couche adhésive assure la liaison définitive entre le substrat et la portion du film fonctionnel.

Selon une caractéristique additionnelle de l'invention, un second sillon est formé entre le premier sillon et une partie utile de la portion du film fonctionnel et de la seconde couche adhésive, sur un côté au moins de cette partie utile. Ce second sillon traverse l'épaisseur du film fonctionnel et éventuellement une partie au moins de la seconde couche adhésive, sans traverser l'épaisseur du film de séparation. Il isole ainsi une marge de la portion du film fonctionnel par rapport à la partie utile de cette portion du film fonctionnel. La portion du film de séparation est alors pelée au début de l'étape /3/ en la saisissant avec la marge de la portion du film fonctionnel en dehors de la partie utile de la portion de film fonctionnel. De cette façon, aucune marque de préhension ni aucun défaut n'est produit dans la partie utile de la portion du film fonctionnel lors du retrait de la portion du film de séparation. Aucun défaut n'est non plus produit dans la partie de la seconde couche adhésive qui reste dans l'assemblage final entre la partie utile du film fonctionnel et le substrat.

Une telle marge peut aussi éviter de produire des défauts dans la partie utile du film fonctionnel à l'étape /2/. En effet, la portion de film fonctionnel, ou l'ensemble qui est constitué par la portion du film fonctionnel, la portion du film de séparation et la portion intermédiaire de la seconde couche adhésive, peut aussi être saisi par la marge de la portion du film fonctionnel, en dehors de la partie utile de cette portion, pour décoller l'ensemble de la plaque de base. On peut aussi utiliser cette marge pour y inscrire des informations diverses, notamment des informations relatives au suivi ou au traçage de la portion de film. Eventuellement, une mire de centrage ou d'alignement peut aussi être inscrite dans la marge, pour faciliter et/ou guider un placement de la portion de film fonctionnel sur le substrat, ou dans un instrument qui est utilisé pour appliquer cette portion sur le substrat.

Ainsi, le premier sillon détermine les portions des films qui sont séparées de la plaque de base, et le second sillon détermine la partie du film fonctionnel qui est finalement reportée sur le substrat.

Les premier et second sillons peuvent être formés dans un ordre quelconque. Ils peuvent être réalisés par découpe ou par creusement.

Selon un mode de mise en oeuvre particulier de l'invention, la force de maintien qui est procurée par chaque couche adhésive contre le film de séparation peut être ajustée par des traitements de ce dernier. Notamment, le film de séparation peut être enduit préalablement de silicone sur ses deux faces opposées qui sont ensuite en contact avec la première et la seconde couche adhésive, respectivement. Le même résultat peut être obtenu via un autre procédé, par exemple en utilisant une première couche adhésive de composition ou de pouvoir adhésif différent de la seconde.

Selon l'invention, et lorsque le second sillon est formé avant le premier sillon, un film intermédiaire peut être fixé sur le film fonctionnel sur une face de ce dernier qui est opposée à la plaque de base. Ce film intermédiaire est fixé sur le film fonctionnel entre les formations respectives des deux sillons. Le premier sillon qui est formé à l'étape /1/ traverse alors aussi une épaisseur du film intermédiaire, de façon à isoler une portion de celui-ci qui coïncide avec la portion du film fonctionnel, par rapport à une partie restante du film intermédiaire. Dans ce cas, la portion du film fonctionnel est séparée de la plaque de base à l'étape /2/ solidairement avec la portion du film intermédiaire.

Un tel film intermédiaire peut être utile pour préformer la portion du film fonctionnel avant que celle-ci soit appliquée sur le substrat. Un tel préformage peut être mis en oeuvre lorsque le substrat présente une surface courbe ou pseudo-sphérique, sur laquelle la portion du film fonctionnel est appliquée à l'étape /3/. Dans le cadre de la présente invention, on entend par surface pseudo-sphérique une surface continue qui ne présente aucune discontinuité, en particulier aucune marche ni aucun trou. Ce peut être une surface plane, sphérique, ou courbe avec des rayons de courbure différents et variables selon des directions perpendiculaires tangentes à la surface. Le préformage peut comprendre les étapes suivantes, qui sont exécutées entre les étapes /2/ et /3/:
- relier la portion du film intermédiaire à une membrane auxiliaire déformable, par des moyens de liaison, puis
- déformer la membrane auxiliaire de façon qu'une forme de la portion du film fonctionnel varie conformément à une déformation de la membrane auxiliaire.

Pour une application ophtalmique de l'invention, le substrat peut être une lentille ophtalmique, ou une ébauche de lentille ophtalmique, ledit substrat comprenant éventuellement un ou plusieurs revêtements. Dans ce cas, le premier et/ou le second sillon peut correspondre sensiblement à une forme de verre de lunettes qui est détouré conformément à un logement de monture de lunettes. De cette façon, la portion du film fonctionnel peut avoir une taille minimale. Une consommation du film fonctionnel peut ainsi être réduite. En outre, une telle réduction de la taille de la portion du film fonctionnel peut diminuer des contraintes susceptibles d'apparaître dans cette portion lorsqu'elle est déformée. D'éventuels défauts qui seraient causés par de telles contraintes de déformation sont donc aussi diminués en conséquence. L'invention trouve également une pleine utilité pour apporter une fonctionnalité à une lentille optique d'un instrument de mesure, d'un instrument de visée, d'un appareil de prise de vue, ou tout autre dispositif comprenant un telle lentille optique.

Selon un second aspect de l'invention, celle-ci propose aussi une structure multicouche qui comprend les caractéristiques de la revendication 10.

Les portions du film intermédiaire, du film fonctionnel et du film de protection ont des bords périphériques externes respectifs qui sont superposés selon la direction d'empilement.

La portion de film fonctionnel présente en outre un sillon sur un côté au moins de celle-ci. Ce sillon sépare une marge par rapport à une partie utile au sein de cette portion de film fonctionnel, à l'intérieur du bord périphérique externe. Il traverse une épaisseur de la portion de film fonctionnel et éventuellement aussi une partie au moins d'une épaisseur de la couche adhésive qui est présente entre le film fonctionnel et le film de protection, mais sans traverser l'épaisseur de la portion de film de protection.

Les portions de film de protection, de couche adhésive et de film fonctionnel qui appartiennent à une telle structure multicouche peuvent être formées conformément à l'étape /1/ d'un procédé selon le premier aspect de l'invention. La portion de couche adhésive et la portion du film de protection qui sont comprises dans la structure correspondent alors respectivement à la portion de seconde couche adhésive et à la portion du film de séparation.

La portion du film fonctionnel est associée en outre à la membrane auxiliaire déformable au sein de la structure multicouche. L'ensemble peut être fabriqué indépendamment d'un substrat sur lequel la portion du film fonctionnel doit être transférée, dans un site de fabrication séparé, puis être fourni à la demande pour être assemblé avec le substrat. Il forme donc un composant autonome et distinct, qui peut être stocké et transformé éventuellement grâce à la protection qui est prévue pour la portion de couche adhésive.

Eventuellement, les moyens de liaison, lorsqu'ils sont présents, peuvent être adaptés pour permettre à la portion de film intermédiaire de glisser localement sur la membrane auxiliaire pendant une déformation de la structure multicouche. De tels moyens de liaison réduisent des contraintes qui sont produites dans la portion de film fonctionnel lorsque la membrane auxiliaire est déformée. Un tel phénomène peut également être obtenu directement par le film fonctionnel est plus particulièrement selon les caractéristiques physiques de la dernière couche du film fonctionnel. Par dernière couche du film fonctionnel on entend la couche étant en relation soit directement avec la membrane auxiliaire déformable, soit directement avec les moyens de liaison.

D'autres particularités et avantages de la présente invention apparaîtront dans la description ci-après d'exemples de mise en oeuvre non limitatifs, en référence aux dessins annexés, dans lesquels :
- les figures 1 à 11 illustrent des étapes successives d'un procédé selon l'invention ;
- la figure 12 est une vue grossie d'une partie de la figure 2, et illustre un perfectionnement de l'invention ; et
- les figures 13a e 13b représentent deux formes possibles pour la portion de film fonctionnel, qui sont adaptées pour une application ophtalmique de l'invention.

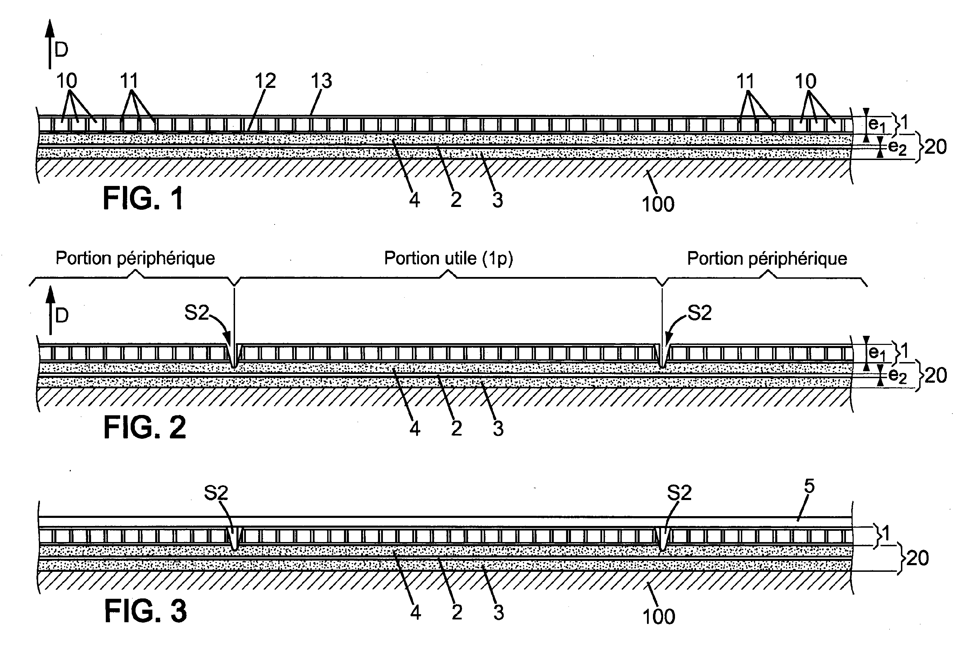

Pour raison de clarté, les dimensions des différents éléments qui sont représentés sur ces figures ne sont pas en proportion avec des dimensions ou des rapports de dimensions réels. En outre, des références identiques qui sont reprises sur des figures différentes indiquent des éléments identiques. Enfin, les figures 1 à 12 sont des coupes d'une structure multicouche conforme à l'invention, qui est orientée d'une même façon d'une figure à l'autre. Dans la suite, les expressions «sur», «sous», «supérieur», «inférieur», «haut» et «bas» font référence à cette orientation.

L'invention est maintenant décrite à titre d'illustration dans le cadre d'une application ophtalmique. Ainsi, une portion de film fonctionnel est destinée à être transférée d'une plaque de base sur laquelle elle est fabriquée, à un substrat de verre de lunettes. Dans les figures, les références 1, 100 et 200 désignent respectivement le film fonctionnel, la plaque de base et le substrat.

La plaque de base 100 peut être rigide. Ce peut être une plaque de verre, notamment, de dimensions supérieures à 32 cm (centimètre) x 38 cm, par exemple.

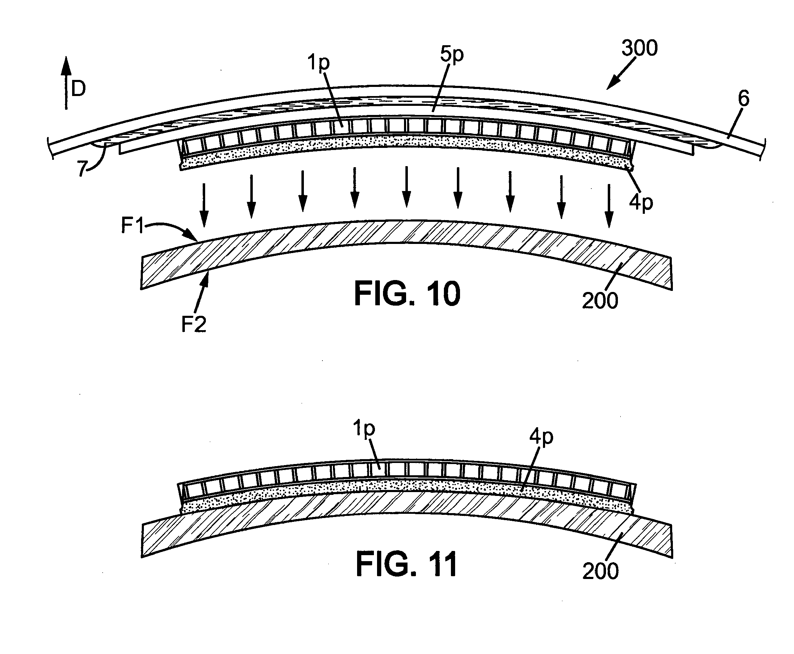

Le substrat 200 peut être une lentille ophtalmique, qui possède une face convexe F1 et une face concave F2 (figure 10). A titre d'exemple, la description qui suit se rapporte à un transfert de la portion du film fonctionnel 1 sur la face convexe F1 de la lentille 200, mais un transfert sur la face concave F2 peut être réalisé d'une façon analogue. Par ailleurs, la portion du film 1 peut être transférée sur la lentille 200 avant ou après que celle-ci soit détourée aux dimensions d'un logement de verre de lunettes dans une monture de lunettes. Dans le premier cas, la portion du film 1 sera positionnée sur la lentille 200 d'une façon appropriée par rapport à la forme et aux caractéristiques optiques et géométriques du verre final après qu'il ait été détouré.

Conformément à la figure 1, l'empilement de couches et films suivant est réalisé sur la plaque de base 100, selon la direction d'empilement D et en partant de la plaque de base :
- une première couche adhésive 3, qui peut être constituée d'un matériau commercial de type PSA, pour «Pressure Sensitive Adhesive»,
- un film de séparation 2, qui peut être en PET (polyéthylène téréphtalate), en TAC (triacétate de cellulose), PVC (polychlorure de vinyle) ou un autre constituant standard des films et avoir une épaisseur notée e₂ d'environ 50 µm (micromètre), par exemple,
- une seconde couche adhésive 4, qui peut être identique à la première couche adhésive 3, et
- le film fonctionnel 1.

La couche 3, le film de séparation 2 et la couche 4 forment ensemble une structure adhérente 20 qui retient le film 1 sur la plaque de base 100. Cette structure est réalisée de façon que l'interface entre le film de séparation 2 et la première couche adhésive 3 présente une cohésion qui est inférieure à celle de l'interface entre le film 2 et la seconde couche adhésive 4. En outre, ces deux interfaces contre le film de séparation 2 sont plus faibles que les autres interfaces qui sont présentes dans l'empilement. Par exemple, l'interface entre le film 2 la couche 3 peut présenter initialement une première valeur d'arrachement («release power» en anglais) qui est comprise entre 4 et 20 g/cm, et l'interface entre le film 2 la couche 4 peut présenter initialement une seconde valeur d'arrachement qui est comprise entre 12 et 28 g/cm. Ces valeurs d'arrachement sont déterminées selon la norme internationale MI-47 (FTM4), d'une façon qui est supposée connue de l'Homme du métier. En particulier, elles sont déterminées en utilisant un ruban TESA^{®}7475.

Les forces de maintien du film de séparation 2 contre le film fonctionnel 1 par la couche adhésive 4, et contre la plaque de base 100 par la couche adhésive 3, peuvent être ajustées en traitant de façon appropriée les deux faces du film 2. Par exemple, ces faces peuvent avoir été enduites préalablement de silicone, notamment avec une quantité d'enduction qui est supérieure pour la face qui est destinée à être en contact avec la couche 3. Alternativement, les faces du film 2 peuvent avoir été traitées par plasma pour obtenir les valeurs d'arrachement souhaitées.

Le film fonctionnel 1 peut être réalisé à la demande, en fonction de chaque commande de verre de lunettes, ou simultanément pour plusieurs commandes de verres. Le film fonctionnel peut être un film multicouche comprenant par exemple un film support en matériau plastique, tel que par exemple du polyéthylène téréphtalate, du polycarbonate, revêtu d'une ou plusieurs couches de matériaux conférant au film une fonction telle qu'une fonction antireflet, antisalissure. Le film fonctionnel peut également comprendre une microstructure. Ainsi, par exemple, au sein du film 1, des cellules sont juxtaposées parallèlement à une surface du film. Chaque cellule contient une substance à propriété optique, qui est sélectionnée pour que l'ensemble des cellules confère ultérieurement au verre de lunettes des caractéristiques optiques et géométriques désirées. Après que la substance ait été introduite dans chaque cellule, les cellules sont fermées hermétiquement. On pourra se référer notamment aux documents suivants, qui décrivent la structure cellulaire ainsi que des méthodes de remplissage et de fermeture des cellules : US 2006-0006336, WO 2007/132116 et WO 2008/000607. Les références 10, 11, 12 et 13 sur la figure 1 désignent respectivement les cellules remplies de substance à propriété optique, des parois de séparation entre les cellules, un film de support du film fonctionnel 1 et un film de fermeture des cellules. En particulier, le film de fermeture 13 est relié aux sommets des parois 11 de façon à fermer chaque cellule 10. L'épaisseur totale du film fonctionnel 1 est notée e₁.

Eventuellement, le film fonctionnel 1 peut comporter en outre des revêtements additionnels sur sa face supérieure, tels qu'un revêtement antireflet, un revêtement antisalissure, etc., ou une combinaison des revêtements précédents ou d'autres revêtements typiques d'une application ophtalmique par exemple.

On forme alors un sillon S2 dans le film fonctionnel 1, alors que ce dernier est maintenu sur la plaque de base 100 par la structure adhérente 20 (figure 2). Le sillon S2 isole une portion utile du film 1, qui est référencée 1 p, par rapport à une portion périphérique du film 1 qui entoure la portion utile. Pour cela, le sillon S2 est formé dans l'empilement à partir du côté de celui-ci qui est opposé à la plaque de base 100. Il peut être réalisé en utilisant une pointe de gravure, ou en dirigeant un faisceau laser de gravure contre l'empilement, parallèlement à la direction D et en sens opposé à celle-ci. Le sillon S2 est gravé de sorte qu'il traverse complètement l'épaisseur e₁ du film fonctionnel 1 ainsi qu'éventuellement une partie de l'épaisseur e₄ de la couche adhésive 4, sans traverser le film de séparation 2. Autrement dit, le film 2 reste continu en dessous du sillon S2. De préférence, le sillon S2 traverse toute l'épaisseur e₄ de la couche adhésive 4.

La portion utile 1 p du film fonctionnel 1 qui est isolée par le sillon S2 correspond avantageusement à la forme finale du verre de lunettes détouré. On entend par «correspond à la forme finale du verre détouré» une coïncidence entre les bords périphériques respectifs de la portion 1 p et du verre après qu'il ait été détouré. Pour cela, le sillon S2 peut être tracé sur le film 1 en prenant en compte d'éventuels retraits ou allongements de la portion 1 p qui pourraient apparaître dans la suite du procédé, avant que la portion utile 1 p soit assemblée avec le substrat 200.

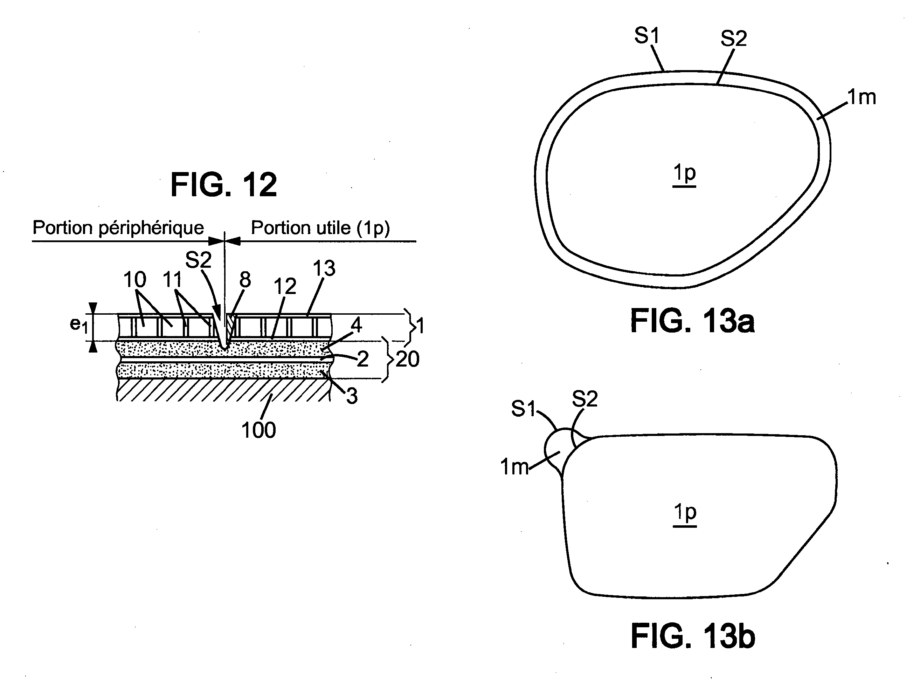

La figure 12 illustre un perfectionnement de l'invention pour la formation du sillon S2. En plus du sillon S2 qui forme une découpe à travers le film fonctionnel 1, un ruban de scellement périphérique 8 peut être disposé à l'intérieur du sillon S2, sur un flanc de celui-ci contre la portion utile 1 p. Le ruban 8 entoure la portion utile 1 p et forme une liaison définitive et étanche entre le film de support 12 et le film de fermeture 13. De cette façon, les cellules 10 qui sont traversées par le sillon S2 sont fermées latéralement. Le ruban 8 peut être constitué du même matériau que les films 12 et 13, par exemple en PET, pour adhérer fermement à ceux-ci. Ainsi, la substance qui est contenue dans les cellules 10 traversées par le sillon S2 reste contenue dans celles-ci, si bien que les propriétés optiques de la portion utile 1 p sont préservées jusqu'à son bord périphérique. Le ruban 8 ne remplit qu'une partie du sillon S2, de sorte que la partie complémentaire du sillon S2 qui reste libre traverse encore le film fonctionnel 1 sur toute l'épaisseur e₁. Ainsi, la portion utile 1 p, complétée par le ruban de scellement 8, reste isolée par le sillon S2 par rapport à la portion périphérique du film 1.

On applique alors un film intermédiaire 5 sur l'empilement (figure 3). Le film intermédiaire 5 recouvre de façon continue le sillon S2 et la portion utile 1 p. Il peut être choisi pour être retiré ultérieurement d'une façon aisée, par exemple par pelage. Jusqu'à ce qu'un tel retrait soit effectué, le film intermédiaire 5 reste fermement solidaire du film fonctionnel 1. Toutefois, l'utilisation du film intermédiaire 5 n'est pas indispensable à la mise en oeuvre de la présente invention.

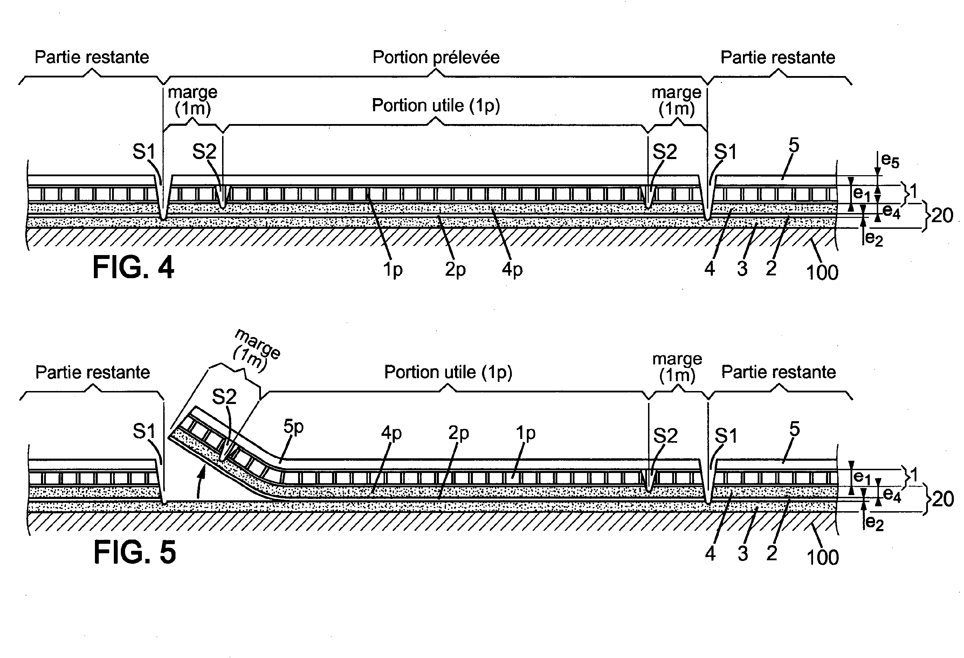

On forme ensuite un autre sillon, qui est référencé S1 sur la figure 4, autour de la portion utile 1 p du film fonctionnel. Le sillon S1 peut être superposé au sillon S2, ou être écarté de ce dernier vers l'extérieur de la portion utile 1p, et ce d'une façon qui peut dépendre de l'endroit autour de la portion 1 p. La figure 13a montre une première configuration possible, selon laquelle les deux sillons S1 et S2 sont sensiblement parallèles tout autour de la portion utile 1 p. La figure 13b montre une seconde configuration possible, selon laquelle ils sont confondus en dehors d'un court segment du sillon S2. Le sillon S1 détermine la portion du film fonctionnel 1 qui va être retirée de la plaque de base 100, par rapport à une portion restante du film 1. Cette portion qui est destinée à être retirée de la plaque 100 est notée «portion prélevée» sur la figure 4. Elle comprend la portion utile 1 p ainsi qu'une marge 1 m qui est comprise entre les sillons S1 et S2. La marge 1 m est séparée de la portion utile 1 p par le sillon S2, mais elle est reliée à celle-ci par l'intermédiaire du film de séparation 2. Dans la configuration de la figure 13a, la marge 1 m constitue une couronne autour de la portion utile 1 p, avec une largeur de couronne qui est sensiblement constante. Dans la configuration de la figure 13b, la marge 1 m est réduite à une languette qui est prévue dans un angle de la partie utile 1 p. Eventuellement, la marge 1 m peut encore constituer une couronne qui entoure la portion utile 1 p, avec une largeur de cette couronne qui est augmentée localement pour former en plus une languette de préhension.

Le sillon S1 peut être réalisé en utilisant une technique de gravure qui est analogue à celle du sillon S2, tout en adaptant les paramètres de mise en oeuvre. Contrairement au sillon S2, le sillon S1 est formé de façon à traverser à la fois le film fonctionnel 1 et le film de séparation 2. Le cas échéant, le sillon S1 traverse en outre le film intermédiaire 5. Autrement dit, la profondeur du sillon S1 est au moins égale à un total de l'épaisseur e₁ du film 1, de l'épaisseur e₄ de la seconde couche adhésive 4, de l'épaisseur e₂ du film de séparation 2, et le cas échéant de l'épaisseur e₅ du film intermédiaire 5. Dans ces conditions, le sillon S1 isole simultanément la portion prélevée du film fonctionnel 1, de même que des portions correspondantes de la couche adhésive 4 et du film de séparation 2. Ces portions de la couche 4 et du film 2 sont référencés 4p et 2p, respectivement.

Les inventeurs indiquent que le sillon S2 qui a été formé en premier lieu n'est pas indispensable pour le transfert de la portion de film fonctionnel sur le substrat 200. Dans ce cas, le sillon S1, qui traverse les films 1 et 2, détermine lui-même la portion utile 1 p du film fonctionnel 1. Celle-ci est alors identique à la portion qui va être retirée de la plaque de base 100. Dans ce cas de sillon S1 unique, il peut être avantageux de prévoir encore un ruban de scellement 8, pour fermer les cellules 10 de la portion utile 1 p qui sont traversées par le sillon S1. A l'inverse, lorsqu'un sillon S2 est utilisé pour définir la portion utile 1 p indépendamment du sillon S1 qui définit la partie prélevée, il n'est pas nécessaire de prévoir une fermeture latérale des cellules 10 sur le bord externe de la portion prélevée, correspondant au sillon S1.

La portion du film fonctionnel 1 qui est isolée par le sillon S1 est décollée de la plaque de base 100 (figure 5). Elle comprend la portion utile 1 p et la marge 1 m, qui sont reliées entre elles par la portion 2p du film de séparation 2. Pour cela, la marge 1 m est soulevée, par exemple en utilisant une lame qui est glissée dans le sillon S1 contre la marge 1 m. La marge 1 m est alors saisie puis tirée progressivement de façon à peler la portion utile 1 p en la décollant de la plaque de base 100. Etant donné que le sillon S1 traverse aussi le film de séparation 2, et que l'adhésion est la plus faible au niveau de l'interface entre le film 2 et la première couche adhésive 3, la rupture de décollement se produit à cette interface. Ainsi, les portions 2p et 4p, respectivement du film de séparation 2 et de la seconde couche adhésive 4, sont retirées en même temps que les portions 1 m et 1 p. La portion 5p du film intermédiaire 5, le cas échéant, est aussi retirée simultanément. Les parties restantes des films 1, 2 et 5, ainsi que de la couche 4 demeurent sur la plaque de base 100.

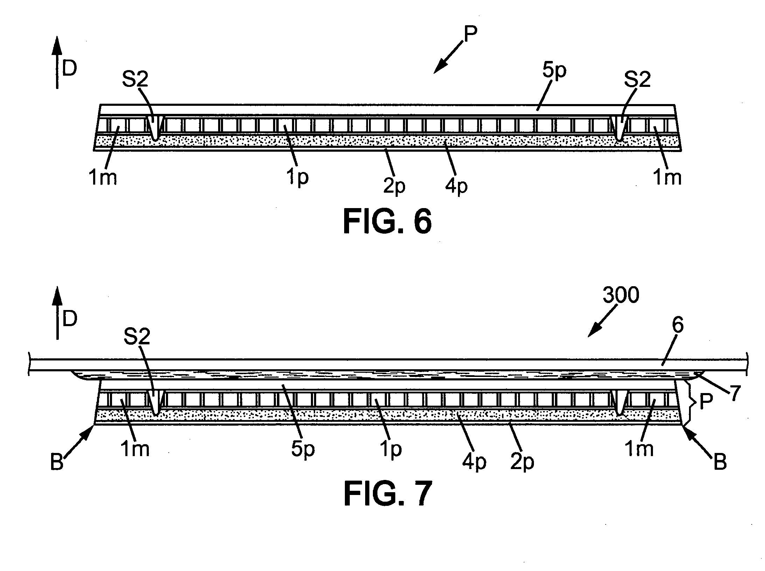

La figure 6 représente la portion d'empilement prélevée, qui a ainsi été séparée de la plaque de base 100. Cette portion d'empilement, référencée globalement P, est autonome et peut être transportée ou stockée facilement. La portion 2p du film de séparation forme alors une protection de la portion 4p de la couche adhésive 4, contre des fixations accidentelles de particules étrangères. Lorsqu'une partie utile de la portion d'empilement P a été définie par un sillon S2 spécifique, ce sillon S2 est limité par la portion 2p du film de séparation vers le bas, et éventuellement par la portion 5p du film intermédiaire vers le haut.

Il est possible de préformer la portion d'empilement P, notamment en vue de l'appliquer sur la face courbe F1 du substrat 200. Pendant le préformage, elle peut être supportée par une membrane auxiliaire déformable, qui est maintenue par son pourtour et déformée en appliquant une différence de pression entre les deux faces de cette membrane. La portion d'empilement P se déforme alors elle-même, en suivant la déformation de la membrane auxiliaire. De cette façon, aucune marque d'outil ni de serrage n'est produite sur la portion d'empilement P.

En outre, il peut être avantageux de fixer la portion d'empilement P sur la membrane auxiliaire par des moyens de liaison qui sont adaptés pour permettre au film intermédiaire de glisser localement sur la membrane auxiliaire. De cette façon, des contraintes qui sont susceptibles d'apparaître dans la portion 1 p du film fonctionnel lorsqu'elle est déformée, peuvent être réduites. Pour cela, les moyens de liaison peuvent être eux-mêmes une couche d'un matériau adhésif visco-élastique ou une couche liquide capillaire, dont la viscosité et/ou la tension de surface est choisie de façon adéquate. En particulier, les moyens de liaison peuvent être une couche de matériau PSA d'épaisseur 25 µm. La membrane auxiliaire peut être en PET, avec une épaisseur qui est adaptée par rapport à la déformation qui est recherchée.

La figure 7 représente la portion d'empilement P après qu'elle ait été associée avec la membrane auxiliaire déformable 6, par les moyens de liaison 7. La structure multicouche qui est ainsi formée est référencée globalement 300. Elle peut être produite sur un site de fabrication dédié, puis stockée et transportée jusqu'à son lieu d'assemblage avec le substrat 200. Dans ce cas, la membrane auxiliaire 6 peut comporter une inscription d'une référence relative à la portion de film fonctionnel 1 p, et/ou relative au site de fabrication de la structure multicouche.

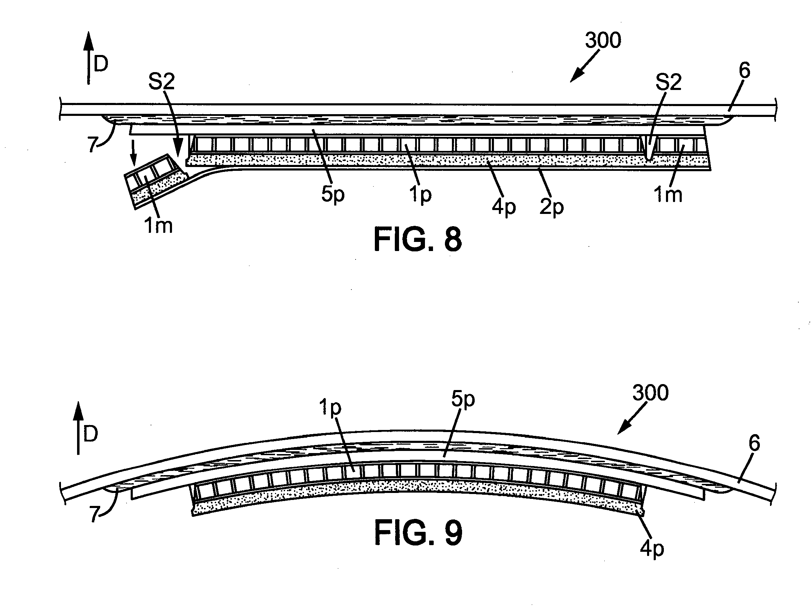

La figure 8 représente l'étape de préparation de la structure multicouche 300 qui permet de mettre à nu la portion utile de la couche adhésive 4p nécessaire pour produire un assemblage définitif avec le substrat 200. La portion 4p de la seconde couche adhésive qui est comprise dans la structure multicouche 300 est ainsi découverte. Pour cela, la portion 2p du film de séparation est pelée en la saisissant au niveau de la marge 1m. Une lame est d'abord enfoncée sur le bord B entre la marge 1 m et la portion 5p de façon à les écarter l'une de l'autre. Puis les parties de la portion 2p et de la marge 1 m qui sont ainsi écartées ensemble de la portion 5p sont saisies avec une pince puis tirées, pour entraîner l'ensemble de la portion 2p. De cette façon, aucune marque d'outil n'est produite dans la portion utile du film fonctionnel 1 p ou sur la seconde couche adhésive 4p restant en contact avec le film fonctionnel 1 p. Lorsque la ligne de décollement de la portion du film fonctionnel par rapport à la portion 5p du film intermédiaire atteint le sillon S2, le décollement se poursuit au niveau de l'interface entre la portion 4p de couche adhésive et la portion 2p du film de séparation. Ainsi, seule la portion 2p du film de séparation est retirée à l'aplomb de la portion utile 1 p du film fonctionnel, et cette dernière reste recouverte par la portion 4p de couche adhésive.

La figure 9 représente la structure multicouche 300 après quelle ait été déformée. Un procédé de préformage tel que décrit dans les documents WO 2006/105999, WO 2007/133208 ou WO 2007/144308, peut notamment être utilisé. En particulier, la structure multicouche 300 peut être chauffée pour être déformée plus facilement.

La portion 4p de couche adhésive est alors appliquée contre la face F1 du substrat 200, à travers la membrane auxiliaire 6, les moyens de liaison 7, la portion 5p et la portion utile 1 p du film fonctionnel (figure 10). Le matériau de la couche 4 est choisi de façon à obtenir une adhésion forte sur le substrat 200, pour produire un assemblage définitif.

Enfin, la membrane auxiliaire 6 est séparée de la portion 1 p du film fonctionnel. Pour cela, elle peut être pelée en rompant les moyens de liaison 7. De préférence, la portion 5p du film intermédiaire est aussi retirée en rompant son interface de liaison avec la portion 1 p. La portion 5p peut être ainsi retirée, notamment lorsque le film 5 n'est pas transparent et/ou qu'il ne possède aucune fonction au sein du verre de lunettes final. Dans ce cas, la fonction de la portion 5p du film intermédiaire est de permettre à la portion 1 p de glisser par rapport à la membrane 6 pendant le préformage, conjointement avec les moyens de liaison 7. Elle évite aussi que des molécules mobiles des moyens de liaison 7 ne diffusent dans la portion 1 p du film fonctionnel et ne génèrent des défauts visibles dans le verre final.

La figure 11 illustre la configuration finale de la lentille 200. La portion utile 1 p du film fonctionnel est alors fixée sur la lentille 200 par la portion 4p de couche adhésive. Grâce à l'invention, la portion 1 p ne présente aucun défaut qui soit susceptible d'être visible au sein du verre de lunettes final. Le verre possède donc une qualité qui est compatible avec les critères de l'application ophtalmique. La lentille 200 peut, comme représentée sur la figure 11, être de dimension supérieure à la portion utile 1 p du film fonctionnel, mais peut être également identique ou inférieure à ladite portion utile 1 p. Le choix de la taille relative de la lentille 200 par rapport à la taille relative de la portion utile 1 p, se fait en fonction de la destination de l'assemblage définitif, tout en prenant en compte la nature des matériaux constitutifs du substrat 200 et du film fonctionnel, ainsi que la surface et la géométrie de l'assemblage définitif.

La marge 1 m de la portion du film fonctionnel qui est découpée avec la partie utile 1 p peut être utilisée pour inscrire diverses données qui concernent cette partie utile. Ces données peuvent comprendre un numéro de série, une date et/ou un site de fabrication, des données de composition chimique, etc. De cette façon, ces données qui sont utiles pendant la fabrication du verre de lunettes ne restent pas sur le produit final, si bien que l'esthétique de celui-ci est préservée.

Cette marge 1 m autour de la partie utile 1 p peut aussi être utilisée pour inscrire des repères de centrage. De tels repères sont utiles lorsque la portion du film fonctionnel 1 est préformée et/ou assemblée avec le substrat 200, et/ou montée dans un outil qui est utilisé pour ce préformage et/ou cet assemblage. Ils peuvent être constitués de traits qui sont orientés selon plusieurs directions, et qui sont destinés à être alignés ou superposés avec d'autres repères portés par le substrat 200 ou par l'outil de préformage ou d'assemblage. Les repères qui sont inscrits sur la marge 1 m sont retirés avec celle-ci, si bien qu'ils ne figurent plus sur le verre de lunettes final.

Il est entendu que des modifications et adaptations de la mise en oeuvre de l'invention qui vient d'être décrite en détail ci-dessus peuvent être introduites, tout en conservant certains au moins des avantages qui ont été cités. Parmi ces avantages, on rappelle que la portion utile du film fonctionnel peut être transférée sur le substrat sans produire de marque sur celle-ci. En particulier, elle peut être manipulée sans la saisir directement avec des outils. En outre, la portion du film fonctionnel qui est transférée peut être intégrée au sein d'une structure multicouche, entre sa séparation d'un support qui est utilisé pour sa fabrication et sa fixation sur le substrat final. Cette structure multicouche assure une protection de la portion du film fonctionnel et d'une portion adhésive qui permet l'assemblage avec le substrat. De plus, elle est compatible avec la mise en oeuvre d'une étape du préformage.

## Revendications

1. Procédé de transfert d'une portion d'un film fonctionnel (1) sur un substrat (200), le film fonctionnel étant retenu initialement sur une plaque de base (100) par une structure adhérente (20) comprenant :
- un film de séparation (2),
- une première couche adhésive (3) retenant le film de séparation sur la plaque de base, et
- une seconde couche adhésive (4) retenant le film fonctionnel sur le film de séparation,
ledit procédé comprenant les étapes suivantes :
/1/ former un premier sillon (S1) traversant une épaisseur (e₁) du film fonctionnel (1) autour de la portion dudit film fonctionnel, de façon à isoler ladite portion du film fonctionnel par rapport à une partie restante dudit film fonctionnel,
/2/ séparer la portion du film fonctionnel par rapport à la plaque de base (100), et
/3/ exposer une portion (4p) de la seconde couche adhésive portée par la portion du film fonctionnel, et appliquer ladite portion de seconde couche adhésive contre le substrat (200), à travers la portion du film fonctionnel pour fixer ladite portion du film fonctionnel sur ledit substrat,
procédé dans lequel :
- le premier sillon (S1) traverse en outre une épaisseur (e₂) du film de séparation (2), de façon à isoler une portion (2p) dudit film de séparation coïncidant avec la portion du film fonctionnel, par rapport à une partie restante dudit film de séparation, et
- un maintien du film de séparation (2) contre le film fonctionnel (1) par la seconde couche adhésive (4) est plus fort qu'un maintien dudit film de séparation (2) contre la plaque de base (100) par la première couche adhésive,
de sorte que la portion du film fonctionnel est séparée de la plaque de base (100) à l'étape /2/ avec la portion du film de séparation (2p), lesdites portions respectives du film fonctionnel et du film de séparation étant retenues solidaires l'une avec l'autre par la portion de la seconde couche adhésive (4p), et
la portion de la seconde couche adhésive (4p) est exposée au début de l'étape /3/ en pelant la portion du film de séparation (2p),
et le procédé comprenant en outre une formation d'un second sillon (S2) entre le premier sillon (S1) et une partie utile (1p) de la portion du film fonctionnel, sur un côté au moins de ladite portion du film fonctionnel, ledit second sillon traversant l'épaisseur du film fonctionnel (e₁) et éventuellement une partie au moins de la seconde couche adhésive (4), sans traverser l'épaisseur du film de séparation (e₂), et isolant une marge (1 m) de la portion du film fonctionnel par rapport à ladite partie utile de la portion du film fonctionnel,
et la portion du film de séparation (2p) est pelée au début de l'étape /3/ en saisissant ladite portion du film de séparation avec la marge (1 m) de la portion du film fonctionnel en dehors de la partie utile (1 p) de ladite portion de film fonctionnel.
procédé suivant lequel ledit second sillon (S2) est formé avant le premier sillon (S1), et un film intermédiaire (5) est fixé sur le film fonctionnel (1) entre les formations respectives des second (S2) et premier (S1) sillons, sur une face dudit film fonctionnel opposée à la plaque de base (100), de sorte que le film intermédiaire (5) recouvre de façon continue le second sillon (S2) et la partie utile (1 p) de la portion du film fonctionnel,
ledit premier sillon (S1) traversant en outre une épaisseur (e₅) du film intermédiaire (5) de façon à isoler une portion (5p) dudit film intermédiaire coïncidant avec la portion du film fonctionnel par rapport à une partie restante dudit film intermédiaire, et
la portion du film fonctionnel étant séparée de la plaque de base (100) à l'étape /2/ solidairement avec la portion (5p) du film intermédiaire.

2. Procédé selon la revendication 1, suivant lequel une première interface entre le film de séparation (2) et la première couche adhésive (3) au sein de la structure adhérente (20) présente initialement une première valeur d'arrachement comprise entre 4 et 20 g/cm,
et une seconde interface entre ledit film de séparation (2) et la seconde couche adhésive (4) au sein de ladite structure adhérente (20) présente initialement une seconde valeur d'arrachement comprise entre 12 et 28 g/cm,
lesdites valeurs d'arrachement étant déterminées selon la norme MI-47.

3. Procédé selon la revendication 1 ou 2, suivant lequel le film de séparation (2) est préalablement enduit de silicone sur deux faces opposées dudit film de séparation, lesdites deux faces étant ensuite en contact respectivement avec la première (2) et la seconde (4) couche adhésive.

4. Procédé selon l'une quelconque des revendications précédentes, suivant lequel la portion du film fonctionnel est séparée de la plaque de base (100) à l'étape /2/ en saisissant ladite portion du film fonctionnel par la marge (1 m), en dehors de la partie utile (1 p) de ladite portion de film fonctionnel.

5. Procédé selon l'une quelconque des revendications précédentes, comprenant en outre les étapes suivantes, exécutées entre les étapes /2/ et /3/ :
- relier la portion du film intermédiaire (5p) à une membrane auxiliaire déformable (6) par des moyens de liaison (7),
- peler la portion du film de séparation (2p) en saisissant ladite portion du film de séparation avec la marge (1 m) de la portion du film fonctionnel en dehors de la partie utile (1 p) de ladite portion de film fonctionnel, puis
- déformer la membrane auxiliaire (6) de façon qu'une forme de la portion du film fonctionnel varie conformément à une déformation de ladite membrane auxiliaire.

6. Procédé selon l'une quelconque des revendications précédentes, suivant lequel le substrat (200) est une lentille ophtalmique.

7. Procédé selon la revendication 6, suivant lequel le premier (S1) ou le second (S2) sillon correspond sensiblement à une forme de verre de lunettes détouré conformément à un logement de monture de lunettes.

8. Procédé selon l'une quelconque des revendications précédentes, suivant lequel le film fonctionnel (1) comprend des cellules (10) juxtaposées parallèlement à une surface dudit film fonctionnel, lesdites cellules étant fermées hermétiquement et contenant chacune une substance à propriété optique.

9. Procédé selon l'une quelconque des revendications précédentes, suivant lequel le film fonctionnel (1) représente un film multicouche comprenant un film support en matériau plastique, revêtu d'une ou plusieurs couches de matériaux conférant une fonctionnalité audit film.

10. Structure multicouche (300) comprenant, dans l'ordre selon une direction d'empilement :
- une membrane auxiliaire déformable (6) ;
- optionnellement des moyens de liaison (7) ;
- une portion (5p) d'un film intermédiaire, reliée à la membrane auxiliaire par les moyens de liaison ;
- une portion d'un film fonctionnel (1), solidaire de ladite portion de film intermédiaire ;
- une portion (4p) de couche adhésive ; et
- une portion (2p) d'un film de protection, retenue sur la portion de film fonctionnel par la portion de couche adhésive, et adaptée pour être retirée de façon à exposer ladite portion de couche adhésive, en laissant ladite portion de la couche adhésive sur la portion du film fonctionnel,
dans laquelle les portions du film intermédiaire, du film fonctionnel et du film de protection ont des bords (B) périphériques externes respectifs superposés selon la direction d'empilement,
et dans laquelle la portion de film fonctionnel présente un sillon (S2) sur un côté au moins de ladite portion de film fonctionnel, ledit sillon séparant une marge (1 m) par rapport à une partie utile (1p) au sein de ladite portion de film fonctionnel à l'intérieur du bord périphérique externe (B), et traversant une épaisseur (e₁) de ladite portion de film fonctionnel et éventuellement une partie au moins d'une épaisseur (e₄) de la couche adhésive (4p), sans traverser une épaisseur (e₂) de la portion de film de protection (2p),
la portion de film intermédiaire (5p) recouvrant de façon continue le sillon (S2) et la partie utile (1 p) de la portion de film fonctionnel.

11. Structure selon la revendication 10, dans laquelle une interface entre la portion de film de protection (2p) et la portion de couche adhésive (4p) présente une valeur d'arrachement comprise entre 12 et 28 g/cm selon la norme MI-47.

12. Structure selon la revendication 10 ou 11, dans laquelle la portion de film de protection (2p) est enduite de silicone sur deux faces opposées de ladite portion de film de protection.

13. Structure selon l'une quelconque des revendications 10 à 12, dans laquelle les moyens de liaison (7) sont adaptés pour permettre à la portion (5p) de film intermédiaire de glisser localement sur la membrane auxiliaire (6) pendant une déformation de la structure multicouche.

14. Structure selon l'une quelconque des revendications 10 à 13, dans laquelle le bord périphérique externe (B), ou le bord du sillon (S2) lorsqu'il est présent, correspond sensiblement à une forme de verre de lunettes détouré conformément à un logement de monture de lunettes.

15. Structure selon l'une quelconque des revendications 10 à 14, dans laquelle la portion de film fonctionnel comprend des cellules (10) juxtaposées dans un plan perpendiculaire à la direction d'empilement, lesdites cellules étant fermées hermétiquement et contenant chacune une substance à propriété optique.

16. Structure selon l'une quelconque des revendications 10 à 14, dans laquelle la portion de film fonctionnel représente un film multicouche comprenant un film support en matériau plastique, revêtu d'une ou plusieurs couches de matériaux conférant une fonctionnalité audit film.

17. Structure selon l'une quelconque des revendications 10 à 16, dans laquelle la membrane auxiliaire (6) comporte une inscription d'une référence relative à la portion de film fonctionnel, ou à un site de fabrication de ladite structure multicouche.

18. Structure selon l'une quelconque des revendications 10 à 17, dans laquelle la marge (1 m) comporte une inscription d'une référence relative à la portion de film fonctionnel, ou à un site de fabrication de ladite structure multicouche.

19. Structure selon l'une quelconque des revendications 10 à 18, dans laquelle la marge (1 m) comporte une inscription d'une mire de centrage ou d'alignement.

## Patentansprüche

1. Verfahren zur Übertragung eines Abschnitts einer Funktionsfolie (1) auf ein Substrat (200), wobei die Funktionsfolie ursprünglich auf einer Basisplatte (100) durch eine Haftstruktur (20) gehalten wird, die enthält:
- eine Trennfolie (2),
- eine erste Haftschicht (3), die die Trennfolie auf der Basisplatte hält, und
- eine zweite Haftschicht (4), die die Funktionsfolie auf der Trennfolie hält,
wobei das Verfahren die folgenden Schritte enthält:
/1/Formen einer ersten Rille (S1), die eine Dicke (e₁) der Funktionsfolie (1) um den Abschnitt der Funktionsfolie herum durchquert, um den Abschnitt der Funktionsfolie bezüglich eines restlichen Teils der Funktionsfolie zu isolieren,
/2/Trennen des Abschnitts der Funktionsfolie bezüglich der Basisplatte (100), und
/3/Freilegen eines Abschnitts (4p) der von dem Abschnitt der Funktionsfolie getragenen zweiten Haftschicht und Auflegen des zweiten Haftschichtabschnitts durch den Abschnitt der Funktionsfolie auf das Substrat (200), um den Abschnitt der Funktionsfolie am Substrat zu befestigen,
Verfahren, bei dem:
- die erste Rille (S1) außerdem eine Dicke (e₂) der Trennfolie (2) durchquert, um einen mit dem Abschnitt der Funktionsfolie zusammenfallenden Abschnitt (2p) der Trennfolie bezüglich eines verbleibenden Teils der Trennfolie zu isolieren, und
- ein Halt der Trennfolie (2) gegen die Funktionsfolie (1) durch die zweite Haftschicht (4) stärker ist als ein Halt der Trennfolie (2) gegen die Basisplatte (100) durch die erste Haftschicht,
so dass der Abschnitt der Funktionsfolie im Schritt /2/ mit dem Abschnitt der Trennfolie (2p) von der Basisplatte (100) getrennt wird, wobei die Abschnitte der Funktionsfolie bzw. der Trennfolie durch den Abschnitt der zweiten Haftschicht (4p) fest miteinander verbunden gehalten werden, und der Abschnitt der zweiten Haftschicht (4p) zu Beginn des Schritts /3/ freigelegt wird, indem der Abschnitt der Trennfolie (2p) abgeschält wird,
und das Verfahren außerdem eine Ausbildung einer zweiten Rille (S2) zwischen der ersten Rille (S1) und einem Nutzbereich (1p) des Abschnitts der Funktionsfolie auf mindestens einer Seite des Abschnitts der Funktionsfolie enthält, wobei die zweite Rille die Dicke der Funktionsfolie (e₁) und gegebenenfalls mindestens einen Teil der zweiten Haftschicht (4) durchquert, ohne die Dicke der Trennfolie (e₂) zu durchqueren, und einen Randbereich (1m) des Abschnitts der Funktionsfolie bezüglich des Nutzbereichs des Abschnitts der Funktionsfolie isoliert,
und der Abschnitt der Trennfolie (2p) zu Beginn des Schritts /3/ / abgeschält wird, indem der Abschnitt der Trennfolie mit dem Randbereich (1m) des Abschnitts der Funktionsfolie außerhalb des Nutzbereichs (1p) des Abschnitts der Funktionsfolie ergriffen wird,
Verfahren, gemäß dem die zweite Rille (S2) vor der ersten Rille (S1) geformt wird, und eine Zwischenfolie (5) auf der Funktionsfolie (1) zwischen den Ausbildungen der zweiten (S2) bzw. ersten (S1) Rille auf einer Seite der Funktionsfolie entgegengesetzt zur Basisplatte (100) befestigt wird, so dass die Zwischenfolie (5) die zweite Rille (S2) und den Nutzbereich (1p) des Abschnitts der Funktionsfolie durchgehend bedeckt,
wobei die erste Rille (S1) außerdem eine Dicke (e₅) der Zwischenfolie (5) durchquert, um einen mit dem Abschnitt der Funktionsfolie zusammenfallenden Abschnitt (5p) der Zwischenfolie bezüglich eines verbleibenden Teils der Zwischenfolie zu isolieren, und
der Abschnitt der Funktionsfolie im Schritt /2/ fest mit dem Abschnitt (5p) der Zwischenfolie verbunden von der Basisplatte (100) getrennt wird.

2. Verfahren nach Anspruch 1, gemäß dem eine erste Schnittstelle zwischen der Trennfolie (2) und der ersten Haftschicht (3) im Inneren der Haftstruktur (20) ursprünglich einen ersten Reißwert zwischen 4 und 20 g/cm aufweist,
und eine zweite Schnittstelle zwischen der Trennfolie (2) und der zweiten Haftschicht (4) im Inneren der Haftstruktur (20) ursprünglich einen zweiten Reißwert zwischen 12 und 28 g/cm aufweist, wobei die Reißwerte gemäß der Norm MI-47 bestimmt werden.

3. Verfahren nach Anspruch 1 oder 2, gemäß dem die Trennfolie (2) vorher auf zwei entgegengesetzten Seiten der Trennfolie mit Silikon bestrichen wird, wobei die zwei Seiten anschließend mit der ersten (2) bzw. der zweiten (4) Haftschicht in Kontakt sind.

4. Verfahren nach einem der vorhergehenden Ansprüche, gemäß dem der Abschnitt der Funktionsfolie im Schritt /2/ von der Basisplatte (100) getrennt wird, indem der Abschnitt der Funktionsfolie über den Randbereich (1m) außerhalb des Nutzbereichs (1p) des Abschnitts der Funktionsfolie ergriffen wird.

5. Verfahren nach einem der vorhergehenden Ansprüche, das weiter die folgenden Schritte enthält, die zwischen den Schritte /2/ und /3/ ausgeführt werden:
- Verbinden des Abschnitts der Zwischenfolie (5p) durch Verbindungseinrichtungen (7) mit einer verformbaren Hilfsmembran (6),
- Abschälen des Abschnitts der Trennfolie (2p) durch Ergreifen des Abschnitts der Trennfolie mit dem Randbereich (1m) des Abschnitts der Funktionsfolie außerhalb des Nutzbereichs (1p) des Funktionsfolienabschnitts, dann
- Verformen der Hilfsmembran (6), damit eine Form des Abschnitts der Funktionsfolie entsprechend einer Verformung der Hilfsmembran variiert.

6. Verfahren nach einem der vorhergehenden Ansprüche, gemäß dem das Substrat (200) eine ophthalmische Linse ist.

7. Verfahren nach Anspruch 6, gemäß dem die erste (S1) oder die zweite (S2) Rille im Wesentlichen einer Brillenglasform entspricht, die entsprechend einer Aufnahme eines Brillengestells formgeschnitten ist.

8. Verfahren nach einem der vorhergehenden Ansprüche, gemäß dem die Funktionsfolie (1) parallel zu einer Fläche der Funktionsfolie nebeneinander angeordnete Zellen (10) enthält, wobei die Zellen hermetisch verschlossen sind und je eine Substanz mit optischer Eigenschaft enthalten.

9. Verfahren nach einem der vorhergehenden Ansprüche, gemäß dem die Funktionsfolie (1) eine Mehrschichtfolie darstellt, die eine mit einer oder mehreren Schichten von Materialien, die der Folie eine Funktionalität verleihen, beschichtete Trägerfolie aus Kunststoff enthält.

10. Mehrschichtstruktur (300), die nacheinander gemäß einer Stapelungsrichtung enthält:
- eine verformbare Hilfsmembran (6);
- optional Verbindungseinrichtungen (7);
- einen Abschnitt (5p) einer Zwischenfolie, der durch die Verbindungseinrichtungen mit der Hilfsmembran verbunden ist;
- einen Abschnitt einer Funktionsfolie (1), der fest mit dem Zwischenfolienabschnitt verbunden ist;
- einen Haftschichtabschnitt (4p); und
- einen Abschnitt (2p) einer Schutzfolie, der durch den Haftschichtabschnitt auf dem Funktionsfolienabschnitt gehalten wird und geeignet ist, um entfernt zu werden, um den Haftschichtabschnitt freizulegen, indem der Abschnitt der Haftschicht auf dem Abschnitt der Funktionsfolie gelassen wird,
wobei die Abschnitte der Zwischenfolie, der Funktionsfolie und der Schutzfolie äußere Umfangsränder (B) haben, die in der Stapelungsrichtung übereinander gelagert sind,
und wobei der Funktionsfolienabschnitt eine Rille (S2) auf mindestens einer Seite des Funktionsfolienabschnitts aufweist, wobei die Rille einen Randbereich (1m) bezüglich eines Nutzbereichs (1p) im Inneren des Funktionsfolienabschnitts innerhalb des äußeren Umfangsrands (B) trennt und eine Dicke (e₁) des Funktionsfolienabschnitts und gegebenenfalls mindestens einen Teil einer Dicke (e₄) der Haftschicht (4p) durchquert, ohne eine Dicke (e₂) des Schutzfolienabschnitts (2p) zu durchqueren, wobei der Zwischenfolienabschnitt (5p) die Rille (S2) und den Nutzbereich (1p) des Funktionsfolienabschnitts durchgehend bedeckt.

11. Struktur nach Anspruch 10, wobei eine Schnittstelle zwischen dem Schutzfolienabschnitt (2p) und dem Haftschichtabschnitt (4p) einen Reißwert zwischen 12 und 28 g/cm gemäß der Norm MI-47 aufweist.

12. Struktur nach Anspruch 10 oder 11, wobei der Schutzfolienabschnitt (2p) auf zwei entgegengesetzten Seiten des Schutzfolienabschnitts mit Silikon bestrichen wird.

13. Struktur nach einem der Ansprüche 10 bis 12, wobei die Verbindungseinrichtungen (7) geeignet sind, um es dem Zwischenfolienabschnitt (5p) zu erlauben, während einer Verformung der Mehrschichtstruktur lokal auf der Hilfsmembran (6) zu gleiten.

14. Struktur nach einem der Ansprüche 10 bis 13, wobei der äußere Umfangsrand (B) oder der Rand der Rille (S2), wenn sie vorhanden ist, im Wesentlichen einer Form eines Brillenglases entspricht, das gemäß einer Aufnahme eines Brillengestells formgeschnitten ist.

15. Struktur nach einem der Ansprüche 10 bis 14, wobei der Funktionsfolienabschnitt in einer Ebene lotrecht zur Stapelungsrichtung nebeneinander angeordnete Zellen (10) enthält, wobei die Zellen hermetisch verschlossen sind und je eine Substanz mit optischer Eigenschaft enthalten.

16. Struktur nach einem der Ansprüche 10 bis 14, wobei der Funktionsfolienabschnitt eine Mehrschichtfolie darstellt, die eine Trägerfolie aus Kunststoff aufweist, die mit einer oder mehreren Schichten von Materialien beschichtet ist, die der Folie eine Funktionalität verleihen.

17. Struktur nach einem der Ansprüche 10 bis 16, wobei die Hilfsmembran (6) eine Aufschrift einer Referenz bezüglich des Funktionsfolienabschnitts oder eines Herstellungsorts der Mehrschichtstruktur aufweist.

18. Struktur nach einem der Ansprüche 10 bis 17, wobei der Randbereich (1m) eine Aufschrift einer Referenz bezüglich des Funktionsfolienabschnitts oder eines Herstellungsorts der Mehrschichtstruktur aufweist.

19. Struktur nach einem der Ansprüche 10 bis 18, wobei der Randbereich (1m) eine Aufschrift einer Zentrier- oder Ausrichtungsmesslatte aufweist.

## Claims

1. Method of transferring a portion of a functional film (1) onto a substrate (200), the functional film being initially retained on a base plate (100) by an adherent structure (20) comprising:
- a separation film (2),
- a first adhesive layer (3) retaining the separation film on the base plate, and
- a second adhesive layer (4) retaining the functional film on the separation film,
said method comprising the following steps:
/1/ forming a first groove (S1) through a thickness (e₁) of the functional film (1) around the portion of said functional film, to isolate said portion of the functional film from a remaining part of said functional film,
/2/ separating the portion of the functional film from the base plate (100), and
/3/ exposing a portion (4p) of the second adhesive layer carried by the portion of the functional film, and applying said second adhesive layer portion to the substrate (200) through the portion of the functional film to fix said portion of the functional film to said substrate,
method in which:
- the first groove (S1) also passes through a thickness (e₂) of the separation film (2), to isolate a portion (2p) of said separation film coinciding with the portion of the functional film from a remaining part of said separation film, and
- retention of the separation film (2) on the functional film (1) by the second adhesive layer (4) is stronger than retention of said separation film (2) on the base plate (100) by the first adhesive layer,
so that the portion of the functional film is separated from the base plate (100) in the step /2/ with the portion (2p) of the separation film, said respective portions of the functional film and the separation film being held together by the portion (4p) of the second adhesive layer, and
the portion (4p) of the second adhesive layer is exposed at the beginning of the step /3/ by peeling the portion (2p) of the separation film,
and the method further comprising forming a second groove (S2) between the first groove (S1) and an active part (1p) of the portion of the functional film, on one side at least of said portion of the functional film, said second groove passing through the thickness (e₁) of the functional film and where applicable at least part of the second adhesive layer (4), without passing through the thickness (e₂) of the separation film, and isolating a margin (1m) of the portion of the functional film from said active part of the portion of the functional film,
and the portion (2p) of the separation film is peeled at the start of the step /3/ by grasping said portion of the separation film with the margin (1m) of the portion of the functional film outside the active part (1p) of said functional film portion,
method wherein the said second groove (S2) is formed before the first groove (S1) and an intermediate film (5) is fixed to the functional film (1) between forming the second groove (S2) and the first groove (S1), on a side of said functional film opposite the base plate (100), so that the intermediate film (5) continuously covers the second groove (S2) and the active part (1p) of the portion of the functional film,
said first groove (S1) further passing through a thickness (e₅) of the intermediate film (5) to isolate a portion (5p) of said intermediate film coinciding with the portion of the functional film from a remaining part of said intermediate film, and
the portion of the functional film being separated from the base plate (100) in the step (2) attached to the portion (5p) of the intermediate film.

2. Method according to Claim 1, wherein a first interface between the separation film (2) and the first adhesive layer (3) within the adherent structure (20) initially has a first release value comprised between 4 and 20 g/cm,
and a second interface between said separation film (2) and the second adhesive layer (4) in said adherent structure (20) initially has a second release value comprised between 12 and 28 g/cm,
said release values being determined according to the MI-47 standard.

3. Method according to Claim 1 or 2, wherein the separation film (2) is coated with silicone beforehand on its two opposite sides, said two sides being thereafter in contact with the first adhesive layer (2) and the second adhesive layer (4), respectively.

4. Method according to any of the preceding claims, wherein the portion of the functional film is separated from the base plate (100) in the step /2/ by grasping said portion of the functional film by the margin (1m), outside the active part (1p) of said functional film portion.

5. Method according to any of the preceding claims, further comprising the following steps, executed between the steps /2/ and /3/:
- connecting the portion (5p) of the intermediate film to a deformable auxiliary membrane (6) by connecting means (7),
- peeling the portion (2p) of the separation film by grasping said portion of the separation film with the margin (1m) of the portion of the functional film outside said active part (1p) of said functional film portion, then
- deforming the auxiliary membrane (6) so that a shape of the portion of the functional film varies in conformance with a deformation of said auxiliary membrane.

6. Method according to any of the preceding claims, wherein the substrate (200) is an ophthalmic lens.

7. Method according to Claim 6, wherein the first groove (S1) or the second groove (S2) substantially corresponds to the shape of an eyeglass lens cut out to conform to an eyeglass frame housing.

8. Method according to any of the preceding claims, wherein the functional film (1) comprises cells (10) juxtaposed parallel to a surface of said functional film, said cells being hermetically sealed and each containing a substance with optical properties.

9. Method according to any of the preceding claims, wherein the functional film (1) is a multilayer film comprising a plastic material support film coated with one or more layers of materials conferring a function on said film.

10. Multilayer structure (300) comprising, in the following order in a stacking direction:
- a deformable auxiliary membrane (6);
- optional connecting means (7);
- a portion (5p) of an intermediate film connected to the auxiliary membrane by the connecting means;
- a portion of a functional film (1) attached to said intermediate film portion;
- a portion (4p) of adhesive layer; and
- a portion (2p) of a protection film held onto the functional film portion by the adhesive layer portion and adapted to be removed to expose said adhesive layer portion, leaving said portion of the adhesive layer on the portion of the functional film, wherein the portions of the intermediate film, the functional film and the protection film have respective external peripheral edges (B) superposed in the stacking direction,
and wherein the functional film portion has a groove (S2) on one side at least of said functional film portion, said groove separating a margin (1m) from an active part (1p) in said functional film portion inside the external peripheral edge (B), and passing through a thickness (e₁) of said functional film portion and where applicable at least part of a thickness (e₄) of the adhesive layer (4), without passing through a thickness (e₂) of the protection film portion (2p), the portion of the intermediate film (5) continuously covering the groove (S2) and the active part (1p) of the portion of the functional film.

11. Structure according to Claim 10, wherein an interface between the protection film portion (2p) and the adhesive layer portion (4p) has a release value between 12 and 28 g/cm according to the MI-47 standard.

12. Structure according to Claim 10 or 11, wherein the protection film portion (2p) is coated with silicone on two opposite sides of said protection film portion.

13. Structure according to any of Claims 10 to 12, wherein the connecting means (7) are adapted to allow the intermediate film portion (5p) to slide locally on the auxiliary membrane (6) during deformation of the multilayer structure.

14. Structure according to any of Claims 10 to 13, wherein the external peripheral edge (B), or the edge of the groove (S2) when present, substantially corresponds to the shape of an eyeglass lens cut out to conform to an eyeglass frame housing.

15. Structure according to any of Claims 10 to 14, wherein the functional film portion comprises cells (10) juxtaposed in a plane perpendicular to the stacking direction, said cells being hermetically sealed and each containing a substance with optical properties.

16. Structure according to any of Claims 10 to 14, wherein the functional film portion is a multilayer film comprising a plastic material support film coated with one or more layers of materials conferring a function on said film.

17. Structure according to any of Claims 10 to 16, wherein the auxiliary membrane (6) includes reference markings relating to the functional film portion or to a fabrication site of said multilayer structure.

18. Structure according to any of Claims 10 to 17, wherein the margin (1m) includes a reference marking relating to the functional film portion or to a fabrication site of said multilayer structure.

19. Structure according to any of Claims 10 to 18, wherein the margin (1m) includes a centring or alignment pattern marking.
